Europäisches Patentamt

European Patent Office

Office européen des brevets

(19)

(11) EP 0 957 602 A2

(12) EUROPEAN PATENT APPLICATION

(43) Date of publication:
17.11.1999 Bulletin 1999/46

(51) Int. Cl.$^6$: H04J 3/06, H04L 12/56,
H04L 29/06

(21) Application number: 99201180.9

(22) Date of filing: 16.04.1999

(84) Designated Contracting States:
AT BE CH CY DE DK ES FI FR GB GR IE IT LI LU
MC NL PT SE
Designated Extension States:
AL LT LV MK RO SI

(30) Priority: 15.05.1998 GB 9810552

(71) Applicant: NDS LIMITED
West Drayton, Middlesex UB7 ODQ (GB)

(72) Inventor: Nagy, Darrin
Southampton SO15 8PH (GB)

(74) Representative:
Stoakes, Rosemarie Clare
NDS Limited,
Gamma House,
Enterprise Road
Chilworth, Hampshire SP16 7NS (GB)

(54) Multiplexer

(57) A method of scheduling data packets in a multiplexer, particularly in an MPEG-2 server, the method comprising the steps of combining a number of packet flows to provide a smaller number of flow queues, and operating a scheduling algorithm on the flow queues to select a packet to be output. The method may also include the step of generating tokens representing the packets and the flow queues may then contain the tokens and not the packets.

Fig.3.

EP 0 957 602 A2

## Description

This invention relates to the field of muliplexers and, more particularly, to a method and apparatus for implementing a scheduling algorithm in a multiplexer.

Scheduling algorithms are used in multiplexers to manage data flow. There are problems inherent in conventional scheduling algorithms and also problems associated with their implementation. This invention is concerned with the reduction or elimination of such problems.

For example, a group of scheduling algorithms known as packet fair queuing algorithms (PFQ) seek to allocate multiplexer output fairly to incoming data packet flows. Fairness is described as the maximum difference between the normalised service received by two backlogged flows over an interval in which both are continuously backlogged. Fairness is desirable so that one packet flow does not receive service in preference to others over the long term. However, PFQ algorithms are generally complex.

Flow isolation is desirable in order to prevent flows from being adversely affected by individual corrupt packet flows, as this improves multiplexer, and hence network, reliability. It is also desirable to keep delay jitter, which is the maximum difference in delays experienced by any two packets in the same flow, to a minimum. Inevitably, algorithms which achieve flow isolation and reduce delay jitter are also complex.

However, for a scheduling algorithm to be implemented in either software running on a microprocessor or directly in hardware its complexity must be limited in order that calculations can be carried out at a rate sufficient to keep up with network traffic. Furthermore, the use of large memory caches and multiple buffers should be limited in order to minimise system cost and complexity.

The object of the present invention is to provide efficient, reliable and cost effective implementation of scheduling algorithms having desirable charcteristics.

According to the present invention there is provided a method of scheduling data packets comprising the steps of:

combining a number of packet flows to provide a smaller number of flow queues; and
operating a scheduling algorithm on the flow queues to select a packet to be output.

Preferably, the algorithm is a Fair Queuing algorithm. When the method is used for scheduling data packets in a MPEG-2 network the algorithm is preferably a Starting Potential based Fair Queuing algorithm.

Preferably, the method further comprises the step of generating tokens representing the packets and the flow queues may then contain the tokens and not the packets. Preferably the tokens comprise a memory address for a packet stored in a packet store.

Alternatively, the tokens may contain PID information relating to the packet flows, and the method may then further comprise the step of mapping the tokens to the packet flows having the corresponding PID.

Any packet flow may be combined with any other packet flow but it is preferable to combine low and high rate packet flows such as those for audio and video data. The combined packet flows should preferably contain related data in order to minimise problems associated with the loss of flow isolation.

Also according to the present invention there is provided an apparatus for scheduling data packets comprising:

mapping means for combining a number of packet flows to provide a smaller number of flow queues; and
controller means for operating a scheduling algorithm on the flow queues to select a packet to be output.

Preferably the apparatus further comprises means for generating tokens representing the packets and the flow queues may then contain the tokens. Communication between the means for generating tokens and the controller means may then be over a channel of lower bandwidth than that required for the packet flows and output.

The invention includes a multiplexer, an MPEG-2 server or a network for transmitting data, including the apparatus for scheduling data packets described above and/or using the method described above. In particular, the invention includes an MPEG-2 network including the apparatus for scheduling data packets described above and/or using the method described above.

An example of the present invention will now be described with reference to the accompanying diagrams, in which:

Figure 1 is a flow chart for a scheduler implementing the use of tokens;
Figure 2 is an illustration of flow mapping; and
Figure 3 is a flow chart of a scheduler implementing the use of tokens and flow mapping.

In this example a Starting Potential based Fair Queueing (SPFQ) algorithm is used. This algorithm has desirable scheduling properties that allow the implementation of, for example, multi-server MPEG-2 networks, but it also has several complex features difficult to implement in a high speed system. In particular, these include the size of virtual time memory(s) required and the complexity of the virtual time reference and packet selection calculations. The complexity of the calculations is a function of the number of flow queues provided. In an MPEG-2 network this is governed by the number of packet identifiers (PIDs) which is a maximum of 8192. Each PID forms a separate packet flow (PID flow) and hence a separate flow queue. There is therefore a compromise between the number of packet flows supported and the packet processing speed of the multiplexer.

SPFQ is a packet fair queueing (PFQ) algorithm suitable for the MPEG-2 network of the present example because of its inherent tight delay bounds, fairness, flow isolation and reasonable computational complexity. It is best implemented in a Field Progammable Gate Array (FPGA) as this provides fast embedded memory and a parallel processing architecture which can be made specific to the application. However, it is not possible to operate at the requisite packet output rate of 100 Mbitss$^{-1}$ using conventional implementation techniques.

The MPEG-2 systems standard (ISO/IEC 13818-1) specifies a packetised transport stream as the communication medium to convey compressed video, audio and associated service information from source to destination. The transport stream is conveyed over an MPEG-2 packet network which comprises of one or more MPEG-2 servers. A multiplexer implemented in a MPEG-2 server orders incoming packet flows onto a common output link. For the purposes of describing MPEG-2 packet scheduling the network layers below the MPEG-2 packet transport stream are not considered.

PFQ algorithms allocate each packet flow a share of the available multiplexer bandwidth. Packets to be scheduled are given a time stamp relative to a virtual time generated by the algorithm. The time stamps are used to order packet selection onto the output link.

The time stamp of a SPFQ algorithm comprises a virtual start time and a virtual finish time which is allocated to all backlogged packets in the scheduler. The start time, $S^k_{i,j}$, and finish time, $F^k_{i,j}$, derived from the virtual time, $V_j$ are defined as

$$S^k_{i,j} = \max\{F^{k-1}_{i,j}, V_j(a^k_{i,j})\}$$

$$F^k_{i,j} = S^k_{i,j} + \frac{L^k_i}{\rho_{i,j}}$$

where $a^k_{i,j}$ is the arrival time of packet $k$ on scheduler flow queue $i$ $(=1,2,..M)$ at multiplexer $j$ $(=1,2,..N)$, and $\rho_{i,j}$ is the rate allocated to scheduler flow queue $i$ of multiplexer $j$.

The calculation of the finish time can be simplified for the MPEG-2 network as this has fixed length packets, so

$$F^k_{i,j} = S^k_{i,j} + \frac{L}{\rho_{i,j}}$$

It can be appreciated that the start time $S^k_{i,j}$ is the later (or greater) of the virtual time at the packet arrival and the finish time of the previous packet in the same flow queue. The finish time $F^k_{i,j}$ is simply the start time $S^k_{i,j}$ plus the time it takes to remove the packet from the flow queue given the rate $\rho_{i,j}$ allocated to the packet's queue. It should be noted that the sum of allocated rates must not exceed the scheduler resources, ie.

$$\sum_i^M \rho_{i,j} \le R_j$$

where $R_j$ is the scheduler output rate of server $j$.

The virtual time function is expressed,

$$V_j(t + \tau) = \max\{V_j(t) + \tau, \min_{i \in B_j(t)}\{S^{k,j(t)}_{i,j}\}\}$$

where $V_j(t)=0$ for $t \le 0$ and $B_j(t)$ is the set of backlogged scheduler flow queues.

Scheduling can be considered as two processes. Firstly, on arrival, packets are stored in a flow queue and their start and finish times are allocated. In order for these times to be allocated, the virtual time must be calculated at the time the packet arrives ($\tau = a^k_{i,j} - t$).

Secondly, the packet with the minimum finish time is selected for output by the scheduler. When the selected packet is removed the virtual time is updated using the soonest start time of the start times of the packets in the scheduler flow queues.

Scheduler flow delay and queue backlog bounds can be described provided a traffic constraint function for the traffic flow is known. The preferred model for determining a traffic constraint function is known as the "leaky bucket" model, in which the flow delay $D$ is expressed as

$$D_{i,j} = \frac{\sigma_{i,j-1}}{r_i} + \Theta^{MAX}_{i,j}$$

$$D_{i,N} = \frac{\sigma_{i,0}}{r_i} + \sum_{j=1}^{N} \Theta^{MAX}_{i,j}$$

where $\sigma_{ij-1}$ is the burstiness of the flow prior to the scheduler $j$. It should also be noted that the burstiness rises monotonically at each multiplexer in the network. Also, the scheduler maximum and minimum latency is expressed

$$\Theta^{MAX}_{i,j} = \frac{L}{\rho_{i,j}} + \frac{L}{R_j}$$

$$\Theta^{MIN}_{i,j} = \frac{L}{R_j}$$

Delay jitter, $DJ$, is expressed as

$$DJ_{i,N} = \frac{\sigma_{i,0}}{r_i} + \sum_{j=1}^{N} (\Theta^{MAX}_{i,j} - \Theta^{MIN}_{i,j})$$

$$DJ_{i,N} = \frac{\sigma_{i,0}}{r_i} + \sum_{j=1}^{N} \frac{L}{\rho_{i,j}}$$

In order to reduce the number of start and finish times which must be stored, only start and finish times for packets at the head of a scheduler flow queue (HoQ), which always have the smallest start and finish time in each queue, are stored. In other words, as the HoQ packets are always scheduled before any other packet in the same queue, only HoQ packet finish times are required by the scheduler to make a scheduling decision. Similarly only HoQ start times are required to update the virtual time reference.

Conveniently, when a packet is selected and removed from a queue and the queue is still backlogged, the new HoQ packet will have a start time equal to the previous packet's finish time as the algorithm will always service a packet before the virtual time reference is greater than that packet's finish time. However, when a packet arrives onto an empty queue a full calculation is required as the packet may arrive before or after the finish time of the last packet. Hence the HoQ start and finish time functions may be defined as

$$S_{i,j}(\alpha^k_{i,j}) = \max(F_{i,j}(\alpha^k_{i,j}-), V_j(\alpha^k_{i,j}-)) \text{ if } q_{i,j}(\alpha^k_{i,j}-) = 0$$

$$S_{i,j}(t') = F_{i,j}(t'-) \text{ if } q_{i,j}(t'-) \neq 0$$

$$F_{i,j}(t) = S_{i,j}(t) + \frac{L}{\rho_{i,j}}$$

where $S_{i,j}(t)=0$ and $F_{i,j}(t)=0$ for $t \leq 0$, $t-$ is the instant before $t$, and $t$ is any packet arrival time, $a^k_{i,j}$ or packet removal time, $t'$.

For simplicity, the full calculation may be used to compute $S_{i,j}$ when a packet is removed.

The set of backlogged HoQ start and finish times may be written

$$\mathbf{S}_j(t) = S_{i \in B(t),j}(t)$$

$$\mathbf{F}_j(t) = F_{i \in B(t),j}(t)$$

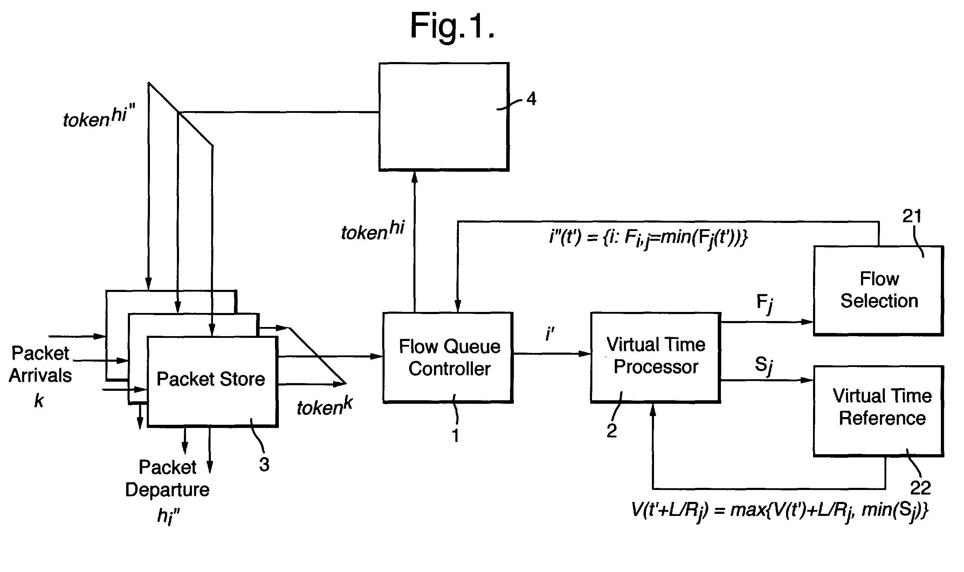

Referring to Figure 1, a flow queue controller 1 maintains the flow queues and acts as a HoQ change filter outputting a scheduler flow queue signal $i'$ when the HoQ packet in queue $i$ changes. A virtual time processor (VTP) 2 receives the scheduler flow queue signals $i'$ and updates the start and finish times when a HoQ change occurs. Only one HoQ change event can occur per scheduler flow queue per output packet selection. The Virtual time reference controller 22 updates the virtual time.

Flow selection is carried out by flow selector 21, which outputs selection signal $i''$ indicating the selected flow queue to the flow queue controller 1. The flow queue controller then initiates removal of the respective packet from the head of the selected flow queue, $h_{i''}$. Packet removal causes a HoQ change event and the HoQ start, finish and virtual time reference are again updated as necessary. It can be appreciated that multiple flow queue controllers may be used.

It can be appreciated that packet storage and removal in flow queues, determining a HoQ change, updating start and finish times, finding the minimum start and finish time, and timing the period between the last virtual time update to a packet arrival or packet selection event all take a finite time to complete. Thus, the data must be held constant while the calculations are performed. This is achieved by packet store 3, shown in Figure 1, in which packet arrivals $k$ are queued until a release time which occurs periodically.

It can be appreciated that, as packet arrival times are delayed by the packet store 3, the resultant start, finish and reference times, and hence packet order, will be different to that of the theoretical case considered above, in which no account is taken of delays caused by hardware.

The interval between release times may conveniently be chosen as the same as the output packet period $\tau = L/R_j$. $\tau$ is a constant so there is no need to measure packet arrival times precisely. As the scheduler is busy transmitting the outgoing packet during $\tau$ the packet store 3 does not cause an overall increase in the delay suffered by any packet flow provided the interval between release times is less than or equal to the output packet period $\tau$.

It is important that the flow queue controller 1 and VTP 2 process incoming packets from the store 3 in time to allow for packet selection and virtual time calculation. This must all be done during the time it takes to output a selected packet.

In order to improve processing speed, a token is used to indicate the packet arrival. Tokens may be used as packet contents are not actually required by the scheduler. In the present example the packet store 3 provides the tokens representing packets arriving at the store.

Each token uniquely identifies a packet and the tokens and not the packets are stored in the flow queues. Then a flow queue is selected by flow selector 21, flow queue controller 1 passes a token relating to the head of queue packet in the selected flow queue to token controller 4. The token controller 4 then identifies the packet in the packet store 3 which corresponds to the token, and the packet is output, in turn, from the packet store 3.

In this example, a token is a memory location for a corresponding packet in the packet store 3 and the token controller 4 simply addresses the packet store 3. However, where there are multiple packet stores 3 the token may also include a packet store identification information. Alternatively, the token may contain the packet PID and the token controller uses a token map to identify the packet store memory location for the given the PID. Conveniently, tokens may contain PIDs remapped as they are required to appear in the output transport stream.

If multiple packet stores 3 are used, as is often the case, the packet store token output should be ordered so that the flow queue controller 1 does not receive simultaneous token arrivals. This may be achieved by using an arbiter to control delivery of tokens from the multiple packet stores. This is not the only way in which tokens may be ordered into the flow queue controller 1, but is advantageous in that tokens from any store can be mapped to any flow queue and a standard multi-drop bus can be used to convey the tokens.

It is difficult to implement an SPFQ algorithm in present hardware such that it operates with sufficient speed and, in particular, with sufficient speed to operate in an MPEG-2 network. Conventional implementation of PFQ algorithms has generally required reduction in the complexity of the algorithm which causes a corresponding reduction in the desirable characteristics of fairness, isolation and delay bound.

The use of tokens is advantageous in that it reduces the amount of data transferred to the flow queue controller 1 and reduces flow queue storage requirements, both of which reduce implementation complexity without compromising performance. Also, the scheduling algorithm can be changed or modified without changing the packet store 3.

It should be noted that plural VTPs 2 may be used in parallel, all linked to a single flow queue controller 1. Each VTP 2 is allocated a number of flow queues and the flow selector 21 selects a flow queue from the results of all the VTPs 2.

In order to improve the possibility of effective implementation without reducing algorithm complexity, the number of packet flows operated upon can be reduced or the speed of the search function of the flow selector 21 which selects the minimum finish time $F^k_{i,j}$ can be improved. It is, of course, undesirable to reduce the number of packet flows operated upon, as this inevitably reduces the amount of data the multiplexer can handle.

Schemes to improve search function speed, such as those using tree structures or more advanced structures like the stratified trees are complex and difficult to implement in hardware. In this example a linear minimum search scheme is employed.

However, even if the linear minimum search is fast, it is unlikely that calculation speed will be improved sufficiently for the multiplexer of the present example to operate in an MPEG-2 network. A technique called flow mapping is therefore employed to reduce the number of scheduler flow queues. Flow mapping involves the mapping of packets from one or more input packet flows to the same scheduler flow queue.

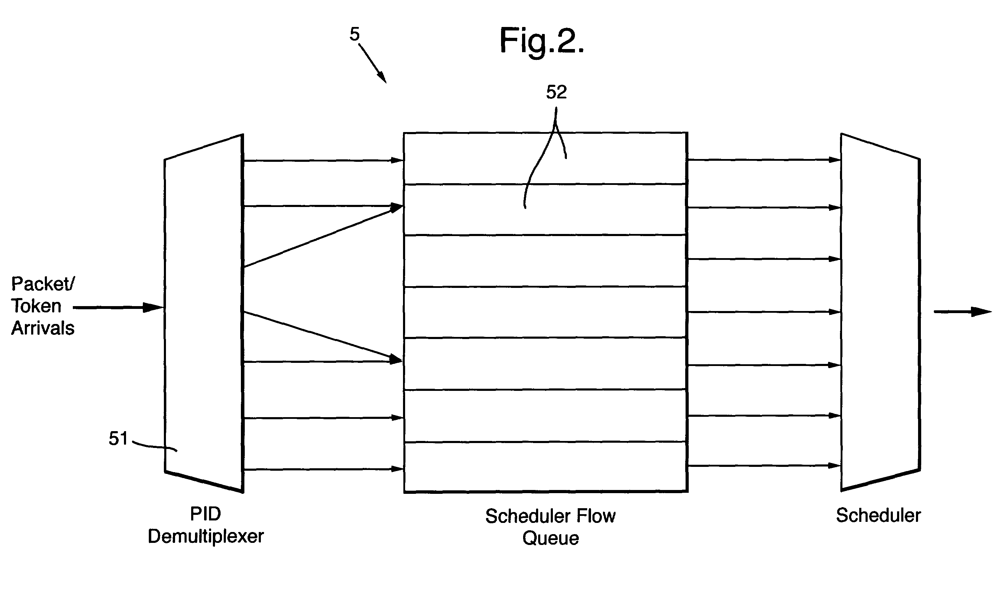

Referring to Figure 2, in an MPEG-2 network, flow mapping allows different PID flows to share the same scheduler flow queue. It is required that each packet flow must map to only one scheduler flow, although many input packet flows can be mapped to the same scheduler flow queue. A flow map controller 5 is therefore provided between packet store 3 and flow queue controller 1. The flow map controller 5 of the present example comprises a PID de-multiplexer 51 for mapping the packet into flow queues (illustratively shown as 52 in Figure 2).

Flow mapping is advantageous in that it allows a realistic number of scheduler flow queues to be provided without restricting the number of schedulable PIDs (ie. packet flows). It also allows the delay bound of an individual input PID flow to be reduced and allows statistically multiplexed PID flows, that have a constant group rate, to be efficiently multiplexed.

It must, however, be noted that, by grouping packet flows into one scheduler flow queue the isolation between the packet flows is lost. Thus, if a packet flow becomes corrupt it will affect the delay and packet loss suffered by other packet flows sharing the same scheduler flow queue. Flow mapping must therefore be implemented carefully. For example, in an MPEG-2 network, corresponding audio and video packet flows may be grouped together.

The number of scheduler flow queues and how the packets are mapped determines the maximum number of PID's that can be scheduled. In an MPEG-2 network, a 100 Mbitss$^{-1}$ transport stream may contain 50 video/audio services and a similar number of information data streams. With the packet flows corresponding to the same service mapped to the same scheduler flow queue, the number of flow queues provided by a basic scheduler should be 100 to 200 flow queues. In other words, if each service has around 4 to 8 PIDs around 400-1600 PIDs can be scheduled.

With flow mapping a scheduler flow queue comprises many packet flows so for leaky bucket modelled streams the new constraint function, $A^*_{i,j}$, is expressed as

$$A^*_{i,j}(\tau) = \sum_{g \in G_{i,j}} \sigma_{g,j} + \tau \sum_{g \in G_{i,j}} r_g$$

where $g$ is the index of packet flows and $G_{i,j}$ is the set of packet flows mapped to scheduler flow queue $i$ at scheduler $j$.

The delay for a scheduler flow queue is now expressed as

$$D_{i,j} = \frac{\sum_{g \in G_{i,j}} \sigma_{g,j} - 1}{\Sigma r_g} + \frac{L}{\rho_{i,j}} + \frac{L}{R_j}$$

The allocated rate, $\rho_{i,j}$, should be greater than or equal to the sum of the rates of input flows mapped to scheduler flow $i$.

As the allocated rate, $\rho_{i,j}$, for the scheduler flow $i$ is going to be higher than the rate of the packet flow, $r_g$, then we notice a key feature of flow mapping, namely that the delay, backlog and jitter bounds of a packet flow can be reduced when it is grouped with other packet flows. It is easy to show that $D_{a+b,j} \leq D_{a,j}$ and hence $DJ_{a+b,j} \leq DJ_{a,j}$ when the following condition exists,

$$\frac{r_b}{r_a} \geq \frac{\sigma_{b,j}}{\sigma_{a,j}+L}$$

Audio flows are low in rate so the number of remultiplex stages before the jitter limits specified by MPEG-2 are violated is low. One way to reduce the delay bound and hence packet jitter is to over allocate scheduler rate to audio flows. However this reduces output utilisation. The alternative provided by flow mapping is to map audio flows to the same queue as a high rate flow. In MPEG-2 transport streams a suitable high rate flow is the associated CBR video flow. As the video rate is significantly higher than the audio rate, without significantly different burstiness, there is a significant reduction in delay bound for the audio component allowing the flow to traverse more remultiplex stages. It can be appreciated that if an audio flow is associated with the video flow at every multiplexer in a network this advantage will be optimised.

Considering, for example, a 192Kbitss$^{-1}$ audio flow, the minimum receiver multiplex buffer, hence allowable delay jitter for audio flows, is 736 bytes or 4 packets. Given a source burstiness of one packet and at each stage the flow is allocated a rate equal to the long term arrival rate then three remultiplex stages are possible. However if the audio flow were mapped in with a 1 Mbitss$^{-1}$ video flow then 8 remultiplex stages are possible.

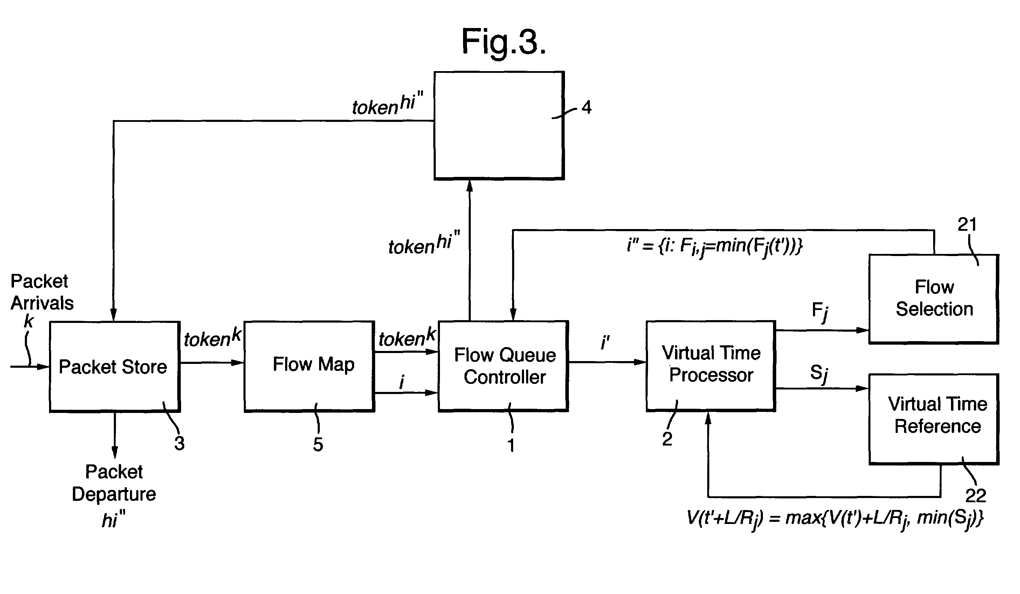

For the implementation, a way of mapping packet flow indices, $g$, to scheduler flow queue indices $i$ is required. As described above, the packet store 3 produces tokens which provide unique identification of packets in the packet store 3, and a token to scheduler flow queue map is also provided. If the tokens contain packet PIDs then the map is conveniently a PID to scheduler flow queue index map. It should, however, be noted that if the token is just a memory location this map would be more complex. Including the packet PID in the token allows the PID to flow queue mapping process to be performed with the token from the packet store 3 as shown in Figure 3.

The flow map controller 5 outputs the token so it can be stored by the flow queue controller 1 in a scheduler flow queue $i$. Advantageously, a shared bus may support multiple packet stores 3 provided a token to flow queue map is provided for each flow queue controller 1. However, as the PID to packet flow association is fairly static the flow mapping function could be integrated with the packet store 3 to remove the need for a flow map controller and scheduler flow queue information included with the token.

Flow mapping also allows the multiplexing of statistically controlled flows to be implemented effectively.

Statistically controlled flows are rate controlled flows arranged into groups by a controller so that the total group bit rate is constant. The members of the group have their rate adjusted to maintain constant data quality. Each flow therefore has a pseudo-variable rate with a maximum bit rate approaching the group maximum.

A problem encountered when implementing a multiplexer handling statistically controlled flows is that traffic flow models, such as the leaky bucket model described above, require a long term packet flow rate parameter for each packet flow to estimate delay bounds. However, as described above, although the statistically controlled flow has a more or less continuous rate, each individual packet flow of the statistically controlled flow has a continuously varying rate. Flow mapping according to the present invention allows all the packet flows of a statistically controlled flow to be grouped to one scheduler flow queue, and thus only the more or less continuous rate of the group needs to be considered to estimate the delay bound. Also, as flow mapping is used the individual packet flows will have lower delay bounds than if they were treated individually (see above).

Finally, it is desirable to separate the packet store 3 and the other incoming packet flow functions from the calculation functions of VTP 2, flow controller 1, flow selector 21 and virtual time reference controller 22. The use of tokens between the packet store and flow queue controller 1 minimises the bandwidth of the channel between these two sections of the scheduler and this channel can thus be a propriety or standard bus interface such as PCI.

## Claims

1. A method of scheduling data packets comprising the steps of:

   combining a number of packet flows to provide a smaller number of flow queues; and
   operating a scheduling algorithm on the flow queues to select a packet to be output.

2. The method of claim 1, wherein the step of operating a scheduling algorithm comprises operating a Fair Queuing algorithm.

3. The method of claim 2, wherein the step of operating a Fair Queuing algorithm comprises operating a Starting Potential based Fair Queuing algorithm.

4. The method of any of claims 1 to 3, further comprising the step of generating tokens representing the packets and wherein the flow queues contain the tokens.

5. The method of claim 4, wherein the step of generating tokens comprises generating tokens which comprise a memory address for a packet stored in a packet store.

6. The method of claim 4, wherein the step of generating tokens comprises generating tokens comprising PID information relating to the packet flows.

7. The method of claim 6, further comprising the step of mapping the tokens to the packet flows having the corresponding PID.

8. The method of any of the preceding claims, wherein the step of combining a number of packet flows comprises combining a low rate packet flow with a high rate packet flow to form a flow queue.

9. The method of any of the preceding claims, wherein the step of combining a number of packet flows comprises combining packet flows of related data to provide a flow queue of related data.

10. The method of claim 8 or 9, wherein the step of combining packet flows comprises combining one packet flow of audio data and another packet flow of corresponding video data.

11. An apparatus for scheduling data packets comprising:

   mapping means for combining a number of packet flows to provide a smaller number of flow queues; and
   controller means for operating a scheduling algorithm on the flow queues to select a packet to be output.

12. The apparatus of claim 11, wherein the algorithm is a Fair Queuing algorithm.

13. The apparatus of claim 12, wherein the algorithm is a Starting Potential based Fair Queuing algorithm.

14. The apparatus of any of claims 11 to 13, further comprising means for generating tokens representing the packets and wherein the flow queues contain the tokens.

15. The apparatus of claim 14, wherein the mapping means and controller means are connected by a channel of lower bandwidth than the channel required for the packet flow and output.

16. The apparatus of claims 14 or 15, wherein the tokens comprise a memory address for a packet stored in a packet store.

17. The apparatus of claims 14 or 15, wherein the tokens contain PID information relating to the packet flows.

18. The apparatus of claim 17, further comprising means for mapping the tokens to the packet flows having the corresponding PID.

19. The apparatus of any of claims 11 to 18, further comprising means for combining a low rate packet flow with a high rate packet flow to form a flow queue.

20. The apparatus of any of claims 11 to 19, wherein data carried by packet flows of a flow queue is related.

21. The apparatus of claim 19 or 20, wherein one packet flow is for audio data and another packet flows is for corresponding video data.

22. A multiplexer including the apparatus of any of claims 11 to 21.

23. An MPEG-2 server including the apparatus of any of claims 11 to 21.

24. A network for transmitting data including the apparatus of any of claims 11 to 21.

25. An MPEG-2 network including the apparatus of any of claims 11 to 21.

# Fig.1.

$token^{hi''}$

$token^{hi}$

$i''(t') = \{i: F_{i,j}=min(F_j(t'))\}$

Packet Arrivals $k$

Packet Store

$token^k$

Packet Departure $h_i''$

Flow Queue Controller

$i'$

Virtual Time Processor

$F_j$

$S_j$

Flow Selection

Virtual Time Reference

$V(t'+L/R_j) = max\{V(t')+L/R_j, min(S_j)\}$

EP 0 957 602 A2

# Fig.2.

5

52

Packet/
Token
Arrivals

51

PID
Demultiplexer

Scheduler Flow
Queue

Scheduler

EP 0 957 602 A2

# Fig.3.

$token^{hi''}$

4

$token^{hi''}$

$i'' = \{i: F_{i,j}=min(F_j(t'))\}$

21

Flow
Selection

Packet
Arrivals
$k$

Packet Store

3

$token^k$

Flow Map

5

$token^k$

$i$

Flow Queue
Controller

1

$i'$

Virtual Time
Processor

2

$F_j$

$S_j$

Virtual Time
Reference

22

Packet
Departure
$hi''$

$V(t'+L/R_j) = max\{V(t')+L/R_j, min(S_j)\}$

EP 0 957 602 A2